# EUROPEAN PATENT APPLICATION

(11) **EP 4 050 544 A1**
(43) Date of publication of application: **31.08.2022**
(21) Application number: 20878408.2
(22) Date of filing: 21.10.2020
(51) Int. Cl.: G06Q 30/06, G06Q 50/28

(54) **PALLET RENTAL SYSTEM, METHOD FOR OPERATING SAME, COMPUTER PROGRAM, AND COMPUTER-READABLE RECORDING MEDIUM**

(30) Priority: 22.10.2019 KR 20190131224; 09.04.2020 KR 20200043268
(71) Applicant: Alporter Co., Ltd., Icheon-si, Gyeonggi-do 17414 (KR)
(72) Inventor: PARK, Yong-Jae, Yongin-si Gyeonggi-do 16950 (KR)
(74) Representative: De Clercq & Partners
(86) International application number: PCT/KR2020/014393
(87) International publication number: WO 2021/080308

(57) **Abstract**

Disclosed is a pallet rental system including: a pallet; an RFID tag attached to one side of each pallet and recorded with a pallet ID to identify the pallet; first and second mobile terminals installed with a pallet rental application and including an RFID tag reading function to read the RFID tag attached to the pallet; first and second gates including an RFID tag reading function to read the RFID tag attached to the pallet; and a pallet rental server configured to manage rental and collection of the pallet based on a pallet rental order of an exporter connected through the pallet rental application, the pallet rental server including a warehouse manager configured to control the RFID tag attached to the pallet taken out of a first warehouse based on the pallet rental order of the exporter to be read by the first gate installed in the first warehouse and be stored in a shipping database; control the RFID tag attached to the pallet to be read by the first mobile terminal, be mapped to goods loaded on the pallet, and be stored in the shipping database when the pallet is shipped to the exporter; control the RFID tag attached to the pallet to be read by the second mobile terminal, be mapped to the goods loaded on the pallet, and be stored in a warehousing database when the taken-out pallet together with the goods is shipped to an importer; and control the RFID tag attached to the pallet collected after the warehousing of the goods to be read by the second gate installed in a second warehouse and be stored in the warehousing database. Thus, a pallet is collectable in import and export between countries, and environmental problems are significantly solved.

## Description

### [Technical Field]

The disclosure relates to a pallet rental system and a method of operating the same, and more particularly to a pallet rental system, in which a pallet is collectable in import and export between countries and environmental problems are significantly solved, and a method of operating the same.

### [Background Art]

Logistics is short for physical distribution, and refers to the flow of goods from manufacturers to consumers. The logistics is defined as a part that creates the usefulness of places and time. The logistics includes all the distribution processes of produced goods, such as transportation, unloading, distribution, and processing; transportation infrastructures; etc., and also includes all information distribution concepts such as communication and information networks, etc.

In particular, a pallet has been developed and used for a long time as an auxiliary means for quickly and safely transporting goods to maximize the efficiency of loading/unloading work

Such a pallet for cargo refers to a transportation tool used as a cargo loading support when a heavy cargo is transported by a forklift. The pallet is classified into a wooden pallet, a steel pallet, a plastic pallet, etc. according to materials, and shaped to stably load a heavy cargo thereon and easily receive the forks of the forklift.

The wooden pallet is relatively inexpensive because the supply and demand of materials are achieved smoothly, but needs to cumbersomely undergo heat treatment, fumigation, and the like additional processes because a fumigation mark is required to prevent the spread of diseases and pests parasitic on the wooden pallet in import and export between countries. The plastic pallet is also relatively inexpensive, but may cause environmental problems in manufacturing and disposal processes because the plastic pallet is made of recycled plastic. The steel pallet is relatively durable but expensive as compared with the wooden pallet or the plastic pallet.

Therefore, the relatively inexpensive wooden and/or plastic pallets are generally used even though they are less durable because it is not easy to collect the pallets in import and export between countries.

Accordingly, it becomes increasingly difficult to collect the pallets supplied together with the cargoes, and thus not only the economic loss of export companies but also the environmental problems caused by repeated manufacturing and disposal have not been fundamentally solved.

### [Disclosure]

### [Technical Problem]

An aspect of the disclosure is to provide a pallet rental system, in which a pallet is collectable in import and export between countries and environmental problems are significantly solved, and a method of operating the same.

Another aspect of the disclosure is to provide a pallet rental system, in which a pallet is collectable in import and export between countries and manufacturing and logistics costs are significantly reduced, and a method of operating the same.

The problems to be solved by the disclosure are not limited to those mentioned above, and other unmentioned problems will become apparent to a person skilled in the art by the following descriptions.

### [Technical Solution]

A first aspect of the disclosure may be achieved by
a pallet rental system includes:
a pallet;
a radio frequency identification (RFID) tag attached to one side of each pallet and recorded with a pallet identifier (ID) to identify the pallet;
first and second mobile terminals installed with a pallet rental application and including an RFID tag reading function to read the RFID tag attached to the pallet;
first and second gates including an RFID tag reading function to read the RFID tag attached to the pallet; and
a pallet rental server configured to manage rental and collection of the pallet based on a pallet rental order of an exporter connected through the pallet rental application,
in this case, the pallet rental server includes
   a warehouse manager configured to control the RFID tag attached to the pallet taken out of a first warehouse based on the pallet rental order of the exporter to be read by the first gate installed in the first warehouse and be stored in a shipping database; control the RFID tag attached to the pallet to be read by the first mobile terminal, be mapped to goods loaded on the pallet, and be stored in the shipping database when the pallet is shipped to the exporter; control the RFID tag attached to the pallet to be read by the second mobile terminal, be mapped to the goods loaded on the pallet, and be stored in a warehousing database when the taken-out pallet together with the goods is shipped to an importer; and control the RFID tag attached to the pallet collected after the warehousing of the goods to be read by the second gate installed in a second warehouse and be stored in the warehousing database.

In this case, the pallet may include an aluminum pallet.

Further, the pallet rental server may include
an order manager configured to check a stored order policy to determine whether to confirm an order with regard to the pallet rental order of the exporter, and control a shipping instruction to be generated with regard to the pallet taken out of the first warehouse after confirming the order.

In this case, the order manager may further
control to generate a collection instruction for the pallet shipped to the importer as a rental period included in the pallet rental order of the exporter expires.

In addition, the shipping instruction for the pallet or the collection instruction for the pallet may be automatically generated as a rental contract drawn up by the pallet rental order of the exporter is established or terminated.

Here, (a) the first warehouse may be directly or indirectly related to a manufacturer of the pallet, and the second warehouse may be related to a first transporter being in charge of the collection of the pallet, or (b) the first warehouse may be related to a second transporter being in charge of the collection of the pallet and the second warehouse may be related to a third transporter being in charge of the collection of the pallet.

Further, the pallet rental server may further include
a contract manager configured to control a rental contract related to the pallet rental order of the exporter, and a transportation contract related to the first transporter and/or the second transporter and the third transporter to be stored in a rental contract database and a transportation contract database, respectively.

A second aspect of the disclosure may be achieved by
a method of operating a pallet rental system for managing rental and collection of a pallet based on a pallet rental order of an exporter, the method including:
controlling a radio frequency identification (RFID) tag attached to the pallet taken out of a first warehouse based on the pallet rental order of the exporter to be read by a first gate installed in the first warehouse and be stored in a shipping database;
controlling the RFID tag attached to the pallet to be read by a first mobile terminal, be mapped to goods loaded on the pallet, and be stored in the shipping database when the pallet is shipped to the exporter;
controlling the RFID tag attached to the pallet to be read by a second mobile terminal, be mapped to the goods loaded on the pallet, and be stored in a warehousing database when the taken-out pallet together with the goods is shipped to an importer; and
controlling the RFID tag attached to the pallet collected after the warehousing of the goods to be read by a second gate installed in a second warehouse and be stored in the warehousing database,
wherein the pallet rental system includes a pallet rental server configured to manage the rental and collection of the pallet based on the pallet rental order of the exporter connected through a pallet rental application, the RFID tag is attached to one side of each pallet and recorded with a pallet identifier (ID) to identify the pallet, the first and second mobile terminals are installed with the pallet rental application and include an RFID tag reading function to read the RFID tag attached to the pallet, and the first and second gates include an RFID tag reading function to read the RFID tag attached to the pallet.

In this case, the pallet may include an aluminum pallet.

Further, the method may further include
checking a stored order policy to determine whether to confirm an order with regard to the pallet rental order of the exporter, and generating a shipping instruction with regard to the pallet taken out of the first warehouse after confirming the order.

In this case, the method may further include
generating a collection instruction for the pallet shipped to the importer as a rental period included in the pallet rental order of the exporter expires.

In addition, the shipping instruction for the pallet or the collection instruction for the pallet may be automatically generated as a rental contract drawn up by the pallet rental order of the exporter is established or terminated.

Here, (a) the first warehouse may be directly or indirectly related to a manufacturer of the pallet, and the second warehouse may be related to a first transporter being in charge of the collection of the pallet, or (b) the first warehouse may be related to a second transporter being in charge of the collection of the pallet and the second warehouse may be related to a third transporter being in charge of the collection of the pallet.

Further, the method may further include
controlling a rental contract related to the pallet rental order of the exporter, and a transportation contract related to the first transporter and/or the second transporter and the third transporter to be stored in a rental contract database and a transportation contract database, respectively.

A third aspect of the disclosure may be achieved by
a computer readable recording medium recorded with a program to perform the foregoing method.

In addition, a fourth aspect of the disclosure may be achieved by
a computer program stored in a medium to perform the method, based on combination with hardware.

### [Advantageous Effects]

As described above, a pallet rental system according to the disclosure and a method of operating the same have advantages in that a pallet is collectable in import and export between countries, and environmental problems are significantly solved.

Further, a pallet rental system according to the disclosure and a method of operating the same have advantages in that a pallet is collectable in import and export between countries, and manufacturing and logistics costs are significantly reduced.

### [Description of Drawings]

FIG. 1 illustrates a pallet rental system according to the disclosure.
FIG. 2 illustrates an embodiment of an aluminum pallet applicable to a pallet rental system according to the disclosure.
FIG. 3 illustrates a client-server configuration in a pallet rental system according to the disclosure.
FIG. 4 illustrates a warehouse management process in a pallet rental system according to the disclosure.
FIG. 5 is a flowchart of a warehouse management process in a pallet rental system according to the disclosure.
FIG. 6A shows an example of a pallet database (DB) applicable to a pallet rental system according to the disclosure.
FIG. 6B shows an example of a shipping DB applicable to a pallet rental system according to the disclosure.
FIG. 6C shows an example of a warehousing DB applicable to a pallet rental system according to the disclosure.
FIG. 6D shows an example of an order DB applicable to a pallet rental system according to the disclosure.
FIG. 6E shows an example of a contract DB applicable to a pallet rental system according to the disclosure.
FIG. 7 is a flowchart of an ordering process of confirming a pallet rental order and then controlling shipment and collection according to the disclosure.

### [Mode for Carrying out Disclosure]

Below, exemplary embodiments of the disclosure will be described in detail with reference to the accompanying drawings. However, the disclosure is not limited or restricted to the exemplary embodiments. Throughout the accompanying drawings, like numerals refer to like elements.

Although the terms first, second, etc. may be used herein to describe various elements, these elements are not limited by these terms. These terms are only used to distinguish one element from another. For example, a first element could be termed a second element, and, similarly, a second element could be termed a first element, without departing from the scope of the disclosure. The terminology used herein is for the purpose of describing particular embodiments only, and is not intended to limit the disclosure. Singular forms are intended to include plural forms as well, unless the context clearly indicates otherwise.

As the terminology used in the disclosure, general terms indicating the functions of the disclosure and currently used as widely as possible are selected. However, these terms may be varied depending on intension of those skilled in the art, the precedents, the advent of new technology, etc. In particular, an applicant may voluntarily choose terms, and in this case the meaning of these terms will be explained in detail in the corresponding description of the disclosure. Therefore, the terminology used in the disclosure should be defined based on not mere naming but its meaning and description made throughout the disclosure.

Throughout the disclosure, when a certain part includes a certain element, the term "include" is intended to not exclude another element but include one or more additional elements unless otherwise specified

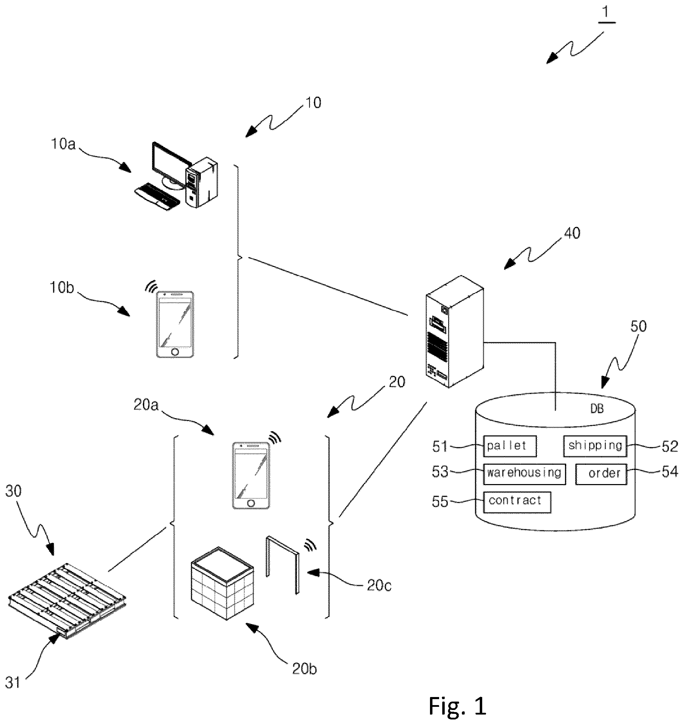

FIG. 1 illustrates a pallet rental system according to the disclosure. Referring to FIG. 1, a pallet rental system 1 according to the disclosure includes at least one pallet 30; and a radio frequency identification (RFID) tag 31 attached to one side of each pallet and recorded with a pallet identifier (ID) to identify the pallet 30.

As mentioned above, wooden pallets, plastic pallets, and the like, which have been developed and used for a long time to maximize the efficiency of loading/unloading work, are inexpensive but less durable, and therefore almost all of them are not collected but practically discarded after being used once in particular in import and export between countries.

Taking such problems into account, a pallet applicable to the pallet rental system according to the disclosure may in particular include an aluminum pallet. Of course, the wooden pallets, the plastic pallets, the steel pallets, and the like that have been conventionally used, may be applicable to the pallet rental system according to the disclosure, but the aluminum pallet is preferable to maximize the economic and environmental effects according to the disclosure.

The reasons why the aluminum pallet is preferable are because 1) bauxite, the main raw material of aluminum, has abundant reserves of more than 38 billion tones worldwide, 2) there are no significant changes in price and material supply due to the abundant reserves of bauxite, 3) it is 100% recyclable, and excellent in durability, corrosion resistance, thermal conductivity, etc., and 4) it is also advantageous to prevent the propagation and spread of harmful microorganisms such as fungi, bacteria, viruses, etc.

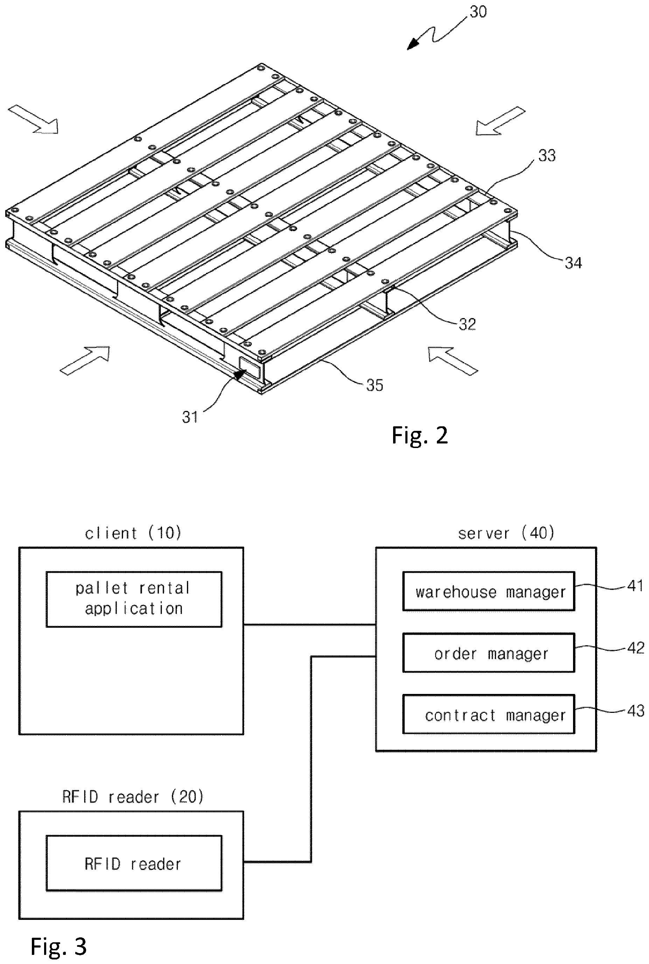

FIG. 2 illustrates an embodiment of an aluminum pallet applicable to a pallet rental system according to the disclosure.

As shown in FIG. 2, the pallet 30 is shaped to stably load a heavy cargo thereon and easily receive forks of a forklift.

The pallet 30 may be formed with four-way entrances (see the arrows in FIG. 2) to easily receive the forks of the forklift therein from four directions, and may be attached with a non-slip pad 32 to stably load a heavy cargo thereon.

In particular, the non-slip pad 32 may be provided corresponding to a position where a top plate 33 and a stringer plate 34 of the pallet 30 are coupled by a screw or the like for convenient maintenance of the pallet 30, and, similarly, may also be provided corresponding to a position where a bottom plate 35 and the stringer plate 34 are coupled by the screw or the like. Of course, any number of non-slip pads 32 may be attached to any position on the top plate 33 and the bottom plate 35 regardless of the foregoing coupling positions. However, as long as the non-slip pads 32 are attached at least corresponding to the foregoing coupling positions, there are advantageous effects because only the non-slip pad 32 is enough to implement not only an anti-slip function but also a protection function to keep the assembled state for a predetermined period of time.

Further, the RFID tag 31 recorded with the pallet ID to identify the pallet 30 is attached to one side of the pallet 30. The RFID tag 31 may be attached to any lateral side of the pallet 30. However, it may be advantageous for supplying and managing the pallets 30 that all or at least some pallets 30 may have the attached position of the RFID tag 31 in common.

In addition, to protect the RFID tag 31 from physical damage (e.g., being torn or peeled off), the RFID tag 31 may be mounted to a groove prepared in advance or may be additionally covered with a cover or the like.

The RFID tag 31 may be not only at least recorded with the pallet ID to identify the pallet 30, but also additionally recorded with appended information about the pallet 30, for example, information about the production of the pallet 30, information about the import/export history of the pallet 30, information about the current status of the pallet 30, etc. to cope with communication problems or the like.

Referring back to FIGS. 1 and 3, the pallet rental system 1 according to the disclosure includes an RFID reader 20 having an RFID tag reading function to read the RFID tag 31 attached to the pallet 30.

The RFID reader 20 may for example include first and second mobile terminals 20a having the RFID tag reading function to read the RFID tag 31 attached to the pallet 30; and first and second gates 20c having the RFID tag reading function to read the RFID tag 31 attached to the pallet 30 according to the kinds of devices or facilities with the RFID tag reading function.

The first and second mobile terminals 20a include various computing devices, in which a pallet rental application or a portion thereof to be implemented on the pallet rental system according to the disclosure is installable to be executed , and which have a function as RFID readers having the RFID tag reading function to read the RFID tag 31 attached to the pallet 30. The first and second mobile terminals 20a may for example include an industrial RFID personal digital assistant (PDA) such as 'AT-911', etc. Thus, a warehousing/shipping history of goods to be exported/imported together with the pallet 30 from an exporter to an importer may be managed.

The first and second gates 20c provide a function as RFID readers having the RFID tag reading function to read the RFID tag 31 attached to the pallet 30. Thus, a warehousing/shipping history of the pallet 30 passed through these gates 20c and then stored in/taken out of a warehouse 20b.

The warehouse 20b at least includes a first warehouse for the pallets to be taken out therefrom, and a second warehouse for the pallets to be stored therein.

For example, when the pallets are first produced and stored in the warehouse, the first warehouse may be directly related to the manufacturer of the pallets. Likewise, when the pallets are first stored in the warehouse related to a cooperative company having the right to operate the pallet rental system according to the disclosure based on a predetermined contract with the manufacturer, the first warehouse may be considered to be indirectly related to the manufacturer of the pallets. In this case, the second warehouse may be related to a first transporter that is in charge of the collection of the pallets.

As another example, in particular, when the pallets are produced and stored in the warehouse after at least one import/export of goods and/or warehousing/shipping of the pallets, the first warehouse may be related to a second transporter that is in charge of first collection of the pallets and the second warehouse may be related to a third transporter that is in charge of second collection of the pallets.

In the foregoing examples, the first transporter, the second transporter, and/or the third transporter transports the pallets from one warehouse to another warehouse under a predetermined contract, and the respective transporters for example transmit the pallets from the warehouse of the manufacturer or cooperative company to the warehouse of the exporter, and/or from the warehouse of the importer to the warehouse of the first transporter, or from the warehouse of the second transporter to the warehouse of the exporter, and/or from the warehouse of the importer to the warehouse of the third transporter. Of course, all or some of the first transporter, the second transporter, and/or the third transporter may be the same or different under a predetermined contract.

A client 10 includes various computing devices, in which a pallet rental application or a portion thereof to be implemented on the pallet rental system according to the disclosure is installable to be executed, and may for example include a laptop computer, a desktop computer, or the like personal computer 10a; or a cellular phone, a PDA, or the like mobile terminal 10b.

Here, the exporter may input a pallet rental order through the pallet rental application installed in the client 10, and monitor the warehousing/shipping status of the goods and/or pallets corresponding to the pallet rental order. Further, the importer and/or the transporter may also monitor the warehousing/shipping status of the goods and/or pallets corresponding to the pallet rental order of the exporter through the pallet rental application installed in the client 10. In this case, the pallet rental application used by the exporter and the pallet rental application used by the importer and/or the transporter may be exactly the same applications, of which activated portions are different according to users, or may be applications individually developed, between which some functions are just shared.

In addition, the pallet rental application installed in the client 10, i.e., the mobile terminal 10b and the pallet rental application installed in the RFID reader 20, i.e., the mobile terminal 20a may be exactly the same applications, of which activated portions are different according to users, or may be applications individually developed, between which some functions are just shared. For example, the pallet rental application installed in the mobile terminal 20a may further include at least a program module that implements a function of storing or changing a database with predetermined data by mapping the pallet corresponding to the RFID tag read by the mobile terminal 20a and the goods loaded on the pallet.

Referring back to FIG. 1, the pallet rental system according to the disclosure includes a pallet rental server 40 that manages the rental and collection of the pallet in response to the pallet rental order of the exporter connected through the pallet rental application, and a database 50 that stores data related to the rental and collection of the pallet managed by the pallet rental server 40.

In this case, the pallet rental server 40 includes various computing devices, in which a pallet rental application (for a server) or a portion thereof to be implemented on the pallet rental system according to the disclosure is installable to be executed, and may for example include a server computer that supports universal network information exchange (UNIX), Windows new technology (NT), Linux, and the like operating system. Of course, the pallet rental server may be embodied as a single computing device, but may be separated into a web application server, a DB server, and/or etc. according to functions to be executed.

The pallet rental server 40 functions to generate and store/manage data related to the rental and collection of the pallet which occur in the pallet rental system. To this end, referring to FIG. 3, the pallet rental server 40 may further include at least a warehouse manager 41 that generates and manages data related to the warehousing/shipping and stock of the pallet; an order manager 42 that generates and manages the pallet rental order; and a contract manager 43 that generates and manages a contract with the exporter, the transporter, and/or the cooperative company. In addition, the pallet rental server 40 may further include a settlement manager (not shown) that generates and manages information related to payment of the exporter, the transporter, and/or the cooperative company.

The warehouse manager 41 controls the RFID tag attached to the pallet taken out of the first warehouse in response to the pallet rental order of the exporter to be read by the first gate installed in the first warehouse and be stored in a shipping database; controls the RFID tag attached to the pallet to be read by the first mobile terminal, be mapped to the goods loaded on the pallet, and be stored in the shipping database when the pallet is shipped to the exporter; controls the RFID tag attached to the pallet to be read by the second mobile terminal, be mapped to the goods loaded on the pallet, and be stored in a warehousing database when the taken-out pallet together with the goods is shipped to the importer; and controls the RFID tag attached to the pallet collected after the warehousing of the goods to be read by the second gate installed in the second warehouse and be stored in the warehousing database.

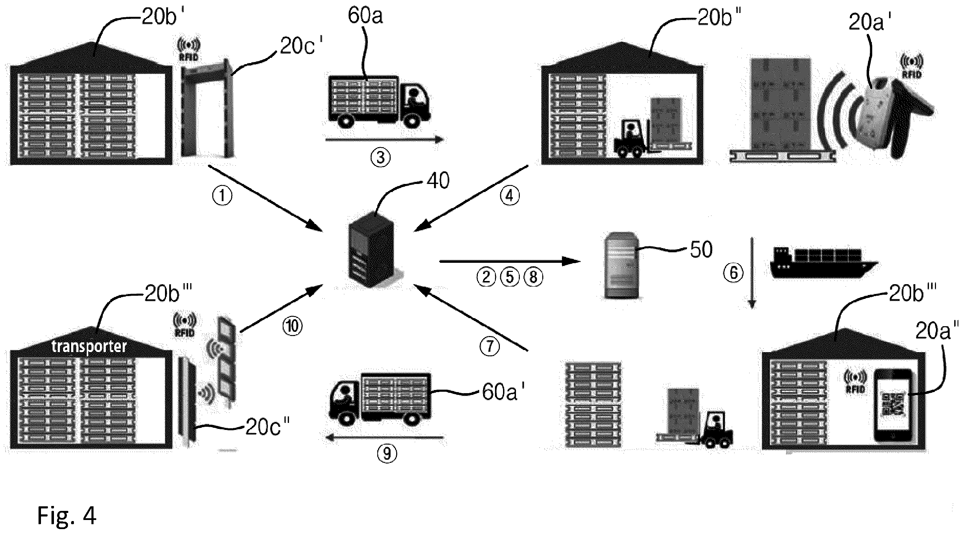

In more detail, descriptions will be made below with reference to FIG. 4 showing the warehouse management process of the pallet rental system according to the disclosure. First, the information about the pallet taken out of the first warehouse 20b' in response to the pallet rental order of the exporter is transmitted to the pallet rental server 40 (directly or via another local server) as the RFID tag attached to the pallet is read by the first gate 20c' installed in the first warehouse 20b' (see ① of FIG. 4), and the transmitted information about the taken-out pallet is stored in the shipping database (see ② of FIG. 4).

When the pallet is shipped to the exporter (by a first transporter 60a) (see ③ of FIG. 4), the exporter that received the pallet obtains information about the received pallet by reading the RFID tag attached to the corresponding pallet through the first mobile terminal 20a' and transmits the obtained information mapping to the goods loaded on the pallet to the pallet rental server 40 (see ④ of FIG. 4), and thus the transmitted information about the received pallet and the mapping goods is stored in the shipping database (see ⑤ of FIG. 4).

When the taken-out pallet together with the goods is shipped to the importer (via a ship, an aircraft, and the like transportation means and through an import procedure (see ⑥ of FIG. 4), the information about the imported pallet and the goods loaded thereon is obtained by reading the RFID tag attached to the corresponding pallet through the second mobile terminal 20a", mapped to the goods loaded on the pallet, and transmitted to the pallet rental server 40 (see ⑦ of FIG. 4), and thus the transmitted information about the imported pallet and the mapping goods is stored in the warehousing database (see ⑧ of FIG. 4).

The goods are unloaded after the warehousing of the pallet and the mapping goods, and thus the mapping between the pallet and the goods loaded thereof may be released. In consequence, the information about the pallet collected to a second warehouse 20b" (see ⑨ of FIG. 4) (by a second transporter 60a' after the warehousing of the goods (as the mapping of the goods is released) is obtained by reading the RFID tag attached to the corresponding pallet through a second gate 20c" installed in the second warehouse 20b" and transmitted to the pallet rental sever 40 (see ⑩ of FIG. 4) (directly or via another local server), and thus the transmitted information about the collected pallet is stored in the warehousing database (see ⑪ of FIG. 4).

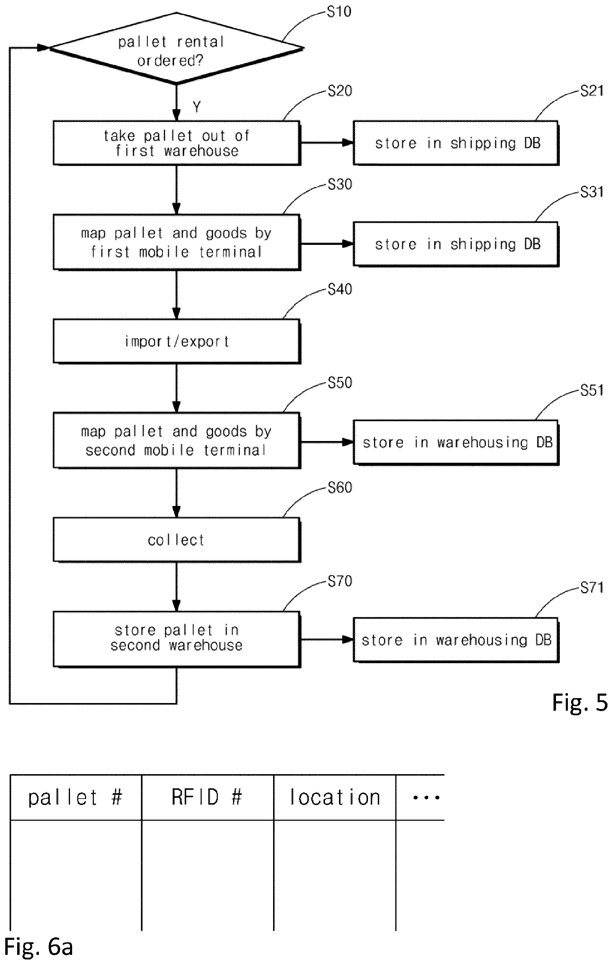

With reference to FIG. 5 showing a flowchart of the warehouse management process in the pallet rental system according to the disclosure, it will be described that the warehouse management process is sequentially carried out in the pallet rental system according to the disclosure.

First, when the exporter makes the pallet rental order (S10), the RFID tag attached to the pallet taken out of the first warehouse is read by the first gate installed in the first warehouse (S20) and stored in the shipping database (S21).

Then, when the pallet is shipped to the exporter, the RFID tag attached to the pallet is read by the first mobile terminal, mapped to the goods loaded on the pallet (S30), and stored in the shipping database (S31).

Such a taken-out pallet together with the goods loaded on the pallet is shipped to the importer through an import/export procedure (S40), and then the RFID tag attached to the pallet is read by the second mobile terminal, mapped to the goods loaded on the pallet (S50), and stored in the warehousing database (S51).

The RFID tag attached to the pallet collected (S60) after the warehousing of the goods is read by the second gate installed in the second warehouse (S70) and stored in the warehousing database (S71).

Last, the pallet is stored in the second warehouse and kept until the next pallet rental order is made, in which the information about the pallet may be managed interworking with a stock database by, for example, a stock manager (not shown) or the like in the pallet rental server. When a pallet rental order for the pallet is made (S10) while the corresponding pallet is being kept in the second warehouse after one loop (after 'S70' in the previous loop), it is of course interpreted that the first warehouse in S20 is the same as the second warehouse in the previous loop (i.e., 'S70' in the previous loop).

Referring back to FIG. 3, in response to the pallet rental order of the exporter, the order manager 42 checks a stored order policy, determines whether to confirm the order, and controls a shipping instruction to be generated with regard to the pallet taken out of the first warehouse after confirming the order.

The order manager 42 may perform control to generate a collection instruction for the pallet shipped to the importer as a rental period included in the pallet rental order of the exporter expires.

In this case, the shipping instruction for the pallet or the collection instruction for the pallet may be automatically generated as a rental contract drawn up by the pallet rental order of the exporter is established or canceled.

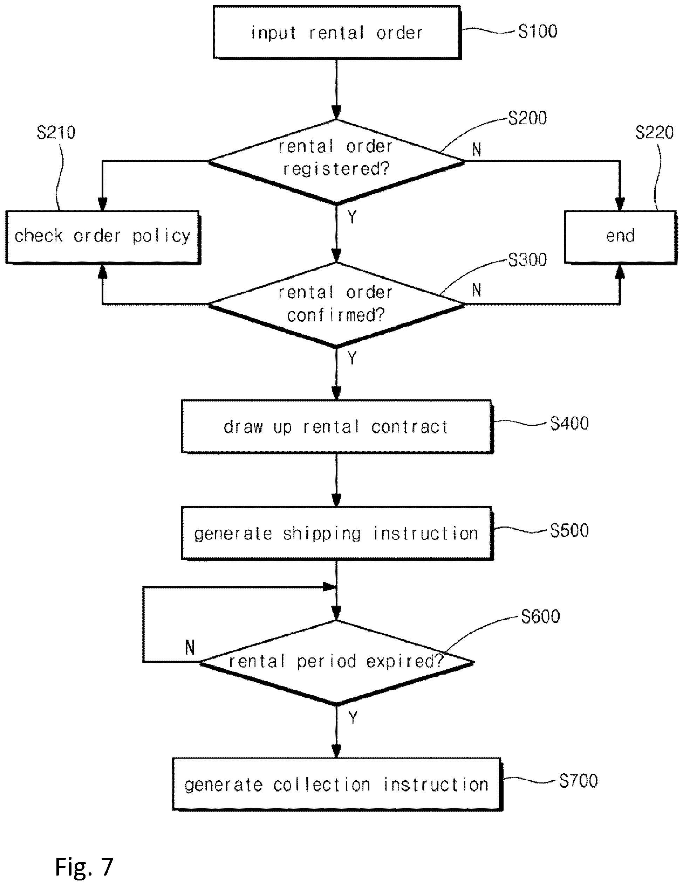

FIG. 7 is a flowchart of an ordering process of confirming a pallet rental order and then controlling shipment and collection according to the disclosure.

First, when the exporter makes a rental order through, for example, the pallet rental application (S100), it may be selectively determined based on the stored order policy whether to allow the registration of the rental order of the exporter (S200).

In this case, the rental order may include information about an exporter, an exporting country and/or importing country, the number of rental pallets, a favorite transporter, a favorite shipping place, for example, a warehouse, etc., and some of them may be directly input by the exporter, or may have already been stored, or may be previously set by default, or may be determined based on a preexisting rental order.

In this case, the order policy may include information about the exporter's credit, whether the pallet rental is allowed/limited in the exporting country and/or importing country, the maximum and/or minimum allowable number of rental pallets at one time, the inventory allowance of the warehouse, etc. Further, the order policy may be established based on a separate DB, and may be sorted and stored according to the exporters, the exporting countries and/or importing countries, and/or the warehouses.

When the input of the rental order of the exporter is allowed, i.e., when the rental order of the exporter is registered, it may be determined whether to confirm the rental order of the exporter (S300) by referencing to the stored order policy (S210).

In this case, the order policy may include information about the exporter's credit, whether the pallet rental is allowed/limited in the exporting country and/or importing country, the maximum and/or minimum allowable number of rental pallets at one time, the inventory allowance of the warehouse, etc. Further, the order policy may be established based on the same DB as or a separate DB from that of the foregoing order policy referenced when it is determined whether to allow the input of the rental order, in which the order policy may be sorted and stored according to the exporters, the exporting countries and/or importing countries, and/or the warehouses.

In addition, it may be determined whether to confirm the rental order of the exporter, by checking the inventory capacity of the warehouse of which shipment will be carried out based on a rental start date. For example, if the number of pallets to be rented by the exporter is greater than the inventory capacity of one warehouse and/or a rentable number, the shipment may be carried out through a plurality of warehouses. In this case, one or more rental contracts and/or one or more shipment instructions may be generated as will be described below.

Further, it may be determined whether to confirm the rental order of the exporter, by checking whether a transporter being in charge of shipping the pallet, a transporter being in charge of collecting the pallet, and the business entity of the corresponding order are registered to the client DB for storing and managing information about, for example, the exporter, the importer, and/or the transporter, based on the rental start date. This has an effect on reducing errors in operating the pallet rental and settling costs by allowing only the pallet rental order of the registered entity.

Of course, the ordering process is terminated (S220) when the rental order of the exporter is not registered or the rental order is not confirmed with reference to the order policy.

Then, a rental contract is drawn up by the pallet rental order of the exporter confirmed in this way (S400). Accordingly, a shipping instruction or the like is generated (S500).

In this case, the rental contract may be drawn up according to, for example, the exporter, the transporter(s) being in charge of shipment and/or collection, and business entity included in the confirmed pallet rental order of the exporter. For example, a rental contract related to the pallet rental order of the exporter, a transportation contract related to the transporter(s), and a business contract related to the business entity may be stored by the contract manager 43 in a rental contract database, a transportation contract database, and a business contract database, respectively.

Such contracts may be used to settle expenses incurred by the pallet rental order, for example, a pallet rental fee of the exporter, the pallet transportation fee of the transporter, a fee incurred by the business of the business entity, etc.

The shipping instructions or the like prepared based on the establishment of the contract may for example include pallet shipping instructions and pallet collection (scheduled) instructions prepared by the warehouse manager 41 according to the warehouses, and expense settlement statements (for example, a rental transaction statement and/or a billing statement) prepared by a settlement manager (not shown), etc.

In addition, the collection instructions may be automatically generated (S700) when the rental period expires (S600), or when the contract is canceled due to the expiration of the rental period.

The contract manager 43 controls at least the rental contract related to the pallet rental order of the exporter, and the transportation contract related to the first transporter and/or the second transporter and the third transporter to be stored in the rental contract database and the transportation contract database. In addition, as described above, the contract manager 43 may control a business contract related to the business entity to be stored in the business contract database, in order to pay a certain amount of fees or the like to the transporter, i.e., the business entity when the order is made by the business of the transporter or the like. Thus, the repetition, expansion, etc. of the pallet rental order are improved, thereby reducing the pallet manufacturing costs and having advantages in environmental protection.

Referring back to FIG. 1, the database 50 includes at least a pallet DB 51 to store and manage information about the pallets, a shipping DB 52 to store and manage information about the pallets taken out of the warehouse, a warehousing DB 53 to store and manage information about the pallets stored in the warehouse, an order DB 54 to store and manage information about the pallet rental order of the exporter, and a contract DB 55 to store and manage contracts established or canceled according to orders. Further, the database 50 may additionally include a client DB to store and manage information about the exporter, the importer, and/or the transporter, or appended DBs to store and manage information about contract conditions and settlement according to the exporter, the importer, and/or the transporter separately from the client DB.

FIG. 6A shows an example of the pallet DB applicable to a pallet rental system according to the disclosure. As shown therein, the pallet DB 51 includes information about the pallets, and may basically include a serial number of the pallets (pallet #), RFID information related to the pallet (RFID #), and information about a location where the pallet is currently located (location). In addition, manufacturing information about the pallet, such as a manufacturing date, a manufacturer, etc. may be further included.

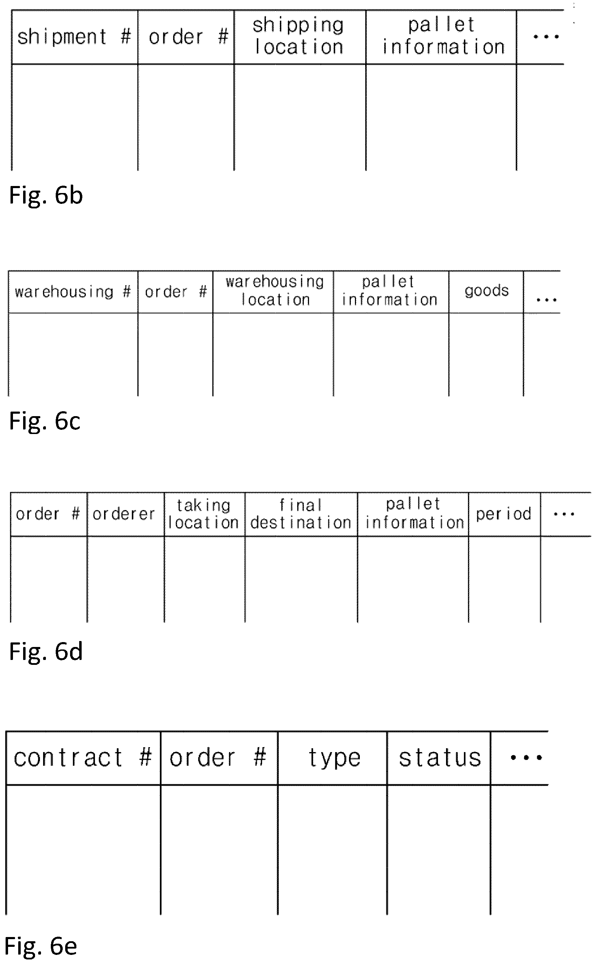

FIG. 6B shows an example of a shipping DB applicable to a pallet rental system according to the disclosure. As shown therein, the shipping DB 52 includes information about the pallets taken out of the warehouse, and may basically include a shipping serial number (shipment #), an order serial number related to such shipping instructions (order #), a location (shipping location) where the pallet is taken out (the exporter/the importer/the transporter and the like client information and/or the warehouse #), and pallet information (such as the number of pallets and/or the pallet #). In addition, when the goods are exported by the exporter as loaded on the pallet, information about the goods according to the pallets may be further included. Besides, information about a destination to which the taken-out pallet is shipped may be included.

FIG. 6C shows an example of a warehousing DB applicable to a pallet rental system according to the disclosure. As shown therein, the warehousing DB 53 stores information about the pallets stored in the warehouse, and may basically include a warehousing serial number (warehousing #), an order serial number related to the warehousing (order #), a location (warehousing location) where the pallet is stored (the exporter/the importer/the transporter and the like client information and/or the warehouse #), and pallet information (such as the number of pallets and/or the pallet #). In addition, when the goods are unloaded from the pallet by the importer, information about the goods according to the pallets may be further included. Besides, information about a departure location from which the stored pallet is shipped may be included.

FIG. 6D shows an example of an order DB applicable to a pallet rental system according to the disclosure. As shown therein, the order DB 54 includes information about the pallet rental order of the exporter, and may basically include an order serial number (order #), information about an orderer (orderer), a location (taking location) where the ordered pallet is taken (exporter/importer/transporter and the like client information and/or warehouse #), a location (final destination) where the ordered pallet arrives (exporter/importer/transporter and the like client information and/or warehouse #), pallet information (such as the number of pallets and/or pallet #), and a rental period (period) (rental start date, rental end date, and/or rental days).

FIG. 6E shows an example of a contract DB applicable to a pallet rental system according to the disclosure. As shown therein, the contract DB 55 includes a contract established or canceled according to orders, and may basically include a contract serial number (contract #), an order serial number related to a contract (order #), a type (type) of contract (rental contract or transportation contract), and a contract status (status) (whether a contract is established or canceled).

Alternatively, instead of sorting based on the types of contract, a rental contract DB and a transport contract DB may be separately provided to store a rental contract related to the pallet rental order of the exporter and a transport contract related to the transporter, respectively.

Meanwhile, methods according to an embodiment of the disclosure may be implemented in the form of program instructions to be carried out through various computing devices, and recorded in a computer readable recording medium.

The program instruction may be collectively called the software, which may include a computer program, a code, an instruction, or combination of one or more among them, and configure the processing devices to operate as desired or issue a command to the processing devices independently or collectively. Software and / or data may be permanently or temporarily embodied in any type of machine, component, physical device, virtual equipment, computer storage medium or device in order to be interpreted by the processing device or to provide instructions or data to the processing device. The software may be distributed over computing devices connected through a network, and stored or executed in a distributed manner. Software and data may be stored in one or more computer readable recording media.

The computer readable medium may include a program instruction, a data file, a data structure, etc. independently or combination thereof. The program instruction recorded in the medium may be specially designed or configured for embodiments, or publicly known and usable to a person having an ordinary kill in the computer software art. The computer readable recording medium may for example include magnetic media such as a hard disk, a floppy disk, and a magnetic tape; optical media such a CD-ROM, and a DVD; magneto-optical media such a floptical disk; and a ROM, RAM, a flash memory or the like hardware device specially configured to store and implement a program instruction. The program instruction may for example include not only a machine language code made by a compiler but also a high-level language code executable by a computer through an interpreter or the like. The hardware device may be configured to operate as one or more software module to perform an operation according to an embodiment, and vice versa.

In brief, with a pallet rental system according to the disclosure and a method of operating the same, a pallet is collectable in import and export between countries, and environmental problems are significantly solved.

Further, with a pallet rental system according to the disclosure and a method of operating the same, a pallet is collectable in import and export between countries, and manufacturing and logistics costs are significantly reduced.

The terms used in this disclosure are generally intended as "open" terms in particular in claims (e.g., the bodies of the claims) (for example, "including" needs to be construed as meaning "including without limitations," "having" needs to be construed as meaning "at least having", and "comprising" needs to be construed as meaning "comprising without limitations." When a specific number is intentionally given in claims, the intention is explicitly described in the claims. On the other hand, no explicit description is construed as absence of the intention.

Although only certain features of the disclosure are illustrated and described above, various modifications and changes can be made by those skilled in the art. Therefore, it will be appreciated that claims are intended to include the changes and modifications within the scope of the disclosure.

## Claims

1. A pallet rental system comprising:
a pallet;
a radio frequency identification (RFID) tag attached to one side of each pallet and recorded with a pallet identifier (ID) to identify the pallet;
first and second mobile terminals installed with a pallet rental application and comprising an RFID tag reading function to read the RFID tag attached to the pallet;
first and second gates comprising an RFID tag reading function to read the RFID tag attached to the pallet; and
a pallet rental server configured to manage rental and collection of the pallet based on a pallet rental order of an exporter connected through the pallet rental application,
the pallet rental server comprising a warehouse manager configured to control the RFID tag attached to the pallet taken out of a first warehouse based on the pallet rental order of the exporter to be read by the first gate installed in the first warehouse and be stored in a shipping database; control the RFID tag attached to the pallet to be read by the first mobile terminal, be mapped to goods loaded on the pallet, and be stored in the shipping database when the pallet is shipped to the exporter; control the RFID tag attached to the pallet to be read by the second mobile terminal, be mapped to the goods loaded on the pallet, and be stored in a warehousing database when the taken-out pallet together with the goods is shipped to an importer; and control the RFID tag attached to the pallet collected after the warehousing of the goods to be read by the second gate installed in a second warehouse and be stored in the warehousing database.

2. The pallet rental system of claim 1, wherein
the pallet comprises an aluminum pallet.

3. The pallet rental system of claim 2, wherein
the pallet rental server comprises an order manager configured to check a stored order policy to determine whether to confirm an order with regard to the pallet rental order of the exporter, and control a shipping instruction to be generated with regard to the pallet taken out of the first warehouse after confirming the order.

4. The pallet rental system of claim 3, wherein
the order manager further controls to generate a collection instruction for the pallet shipped to the importer as a rental period included in the pallet rental order of the exporter expires.

5. The pallet rental system of claim 3 or 4, wherein the shipping instruction for the pallet or the collection instruction for the pallet is automatically generated as a rental contract drawn up by the pallet rental order of the exporter is established or terminated.

6. The pallet rental system of claim 5, wherein
(a) the first warehouse is directly or indirectly related to a manufacturer of the pallet, and the second warehouse is related to a first transporter being in charge of the collection of the pallet, or (b) the first warehouse is related to a second transporter being in charge of the collection of the pallet and the second warehouse is related to a third transporter being in charge of the collection of the pallet.

7. The pallet rental system of claim 6, wherein
the pallet rental server further comprises a contract manager configured to control a rental contract related to the pallet rental order of the exporter, and a transportation contract related to the first transporter and/or the second transporter and the third transporter to be stored in a rental contract database and a transportation contract database, respectively.

8. A method of operating a pallet rental system for managing rental and collection of a pallet based on a pallet rental order of an exporter, the method comprising:
controlling a radio frequency identification (RFID) tag attached to the pallet taken out of a first warehouse based on the pallet rental order of the exporter to be read by a first gate installed in the first warehouse and be stored in a shipping database;
controlling the RFID tag attached to the pallet to be read by a first mobile terminal, be mapped to goods loaded on the pallet, and be stored in the shipping database when the pallet is shipped to the exporter;
controlling the RFID tag attached to the pallet to be read by a second mobile terminal, be mapped to the goods loaded on the pallet, and be stored in a warehousing database when the taken-out pallet together with the goods is shipped to an importer; and
controlling the RFID tag attached to the pallet collected after the warehousing of the goods to be read by a second gate installed in a second warehouse and be stored in the warehousing database,
wherein the pallet rental system comprises a pallet rental server configured to manage the rental and collection of the pallet based on the pallet rental order of the exporter connected through a pallet rental application, the RFID tag is attached to one side of each pallet and recorded with a pallet identifier (ID) to identify the pallet, the first and second mobile terminals are installed with the pallet rental application and comprise an RFID tag reading function to read the RFID tag attached to the pallet, and the first and second gates comprise an RFID tag reading function to read the RFID tag attached to the pallet.

9. The method of claim 8, wherein
the pallet comprises an aluminum pallet.

10. The method of claim 9, further comprising
checking a stored order policy to determine whether to confirm an order with regard to the pallet rental order of the exporter, and generating a shipping instruction with regard to the pallet taken out of the first warehouse after confirming the order.

11. The method of claim 10, further comprising
generating a collection instruction for the pallet shipped to the importer as a rental period included in the pallet rental order of the exporter expires.

12. The method of claim 10 or 11, wherein the shipping instruction for the pallet or the collection instruction for the pallet is automatically generated as a rental contract drawn up by the pallet rental order of the exporter is established or terminated.

13. The method of claim 12, wherein
(a) the first warehouse is directly or indirectly related to a manufacturer of the pallet, and the second warehouse is related to a first transporter being in charge of the collection of the pallet, or (b) the first warehouse is related to a second transporter being in charge of the collection of the pallet and the second warehouse is related to a third transporter being in charge of the collection of the pallet.

14. The method of claim 13, further comprising
controlling a rental contract related to the pallet rental order of the exporter, and a transportation contract related to the first transporter and/or the second transporter and the third transporter to be stored in a rental contract database and a transportation contract database, respectively.

15. A computer readable recording medium recorded with a program to perform the method of any one of claims 8 to 14.

16. A computer program stored in a medium to perform the method of any one of claims 8 to 14, based on combination with hardware.
